(19) Europäisches Patentamt
European Patent Office
Office européen des brevets

(11) **EP 4 324 874 A1**

(12) **EUROPEAN PATENT APPLICATION**
published in accordance with Art. 153(4) EPC

(43) Date of publication:
**21.02.2024 Bulletin 2024/08**

(21) Application number: **22787931.9**

(22) Date of filing: **16.03.2022**

(51) International Patent Classification (IPC):
***C08K 7/02*** (2006.01) ***C08L 81/06*** (2006.01)
***C08L 71/10*** (2006.01) ***C08L 79/08*** (2006.01)

(52) Cooperative Patent Classification (CPC):
**C08K 7/02; C08L 71/10; C08L 79/08; C08L 81/06; C08L 81/08**

(86) International application number:
**PCT/JP2022/012044**

(87) International publication number:
**WO 2022/220005 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2021 JP 2021068309**

(71) Applicant: **Sumitomo Chemical Company, Limited**
**Chuo-ku**
**Tokyo 103-6020 (JP)**

(72) Inventor: **YAMANISHI Keisuke**
**Tokyo 103-6020 (JP)**

(74) Representative: **Vossius & Partner**
**Patentanwälte Rechtsanwälte mbB**
**Siebertstrasse 3**
**81675 München (DE)**

(54) **RESIN COMPOSITION AND MOLDED BODY**

(57) A resin composition comprises a polyether ether ketone, an aromatic polysulfone, a polyetherimide, and a fibrous filler.

[Figure 1]

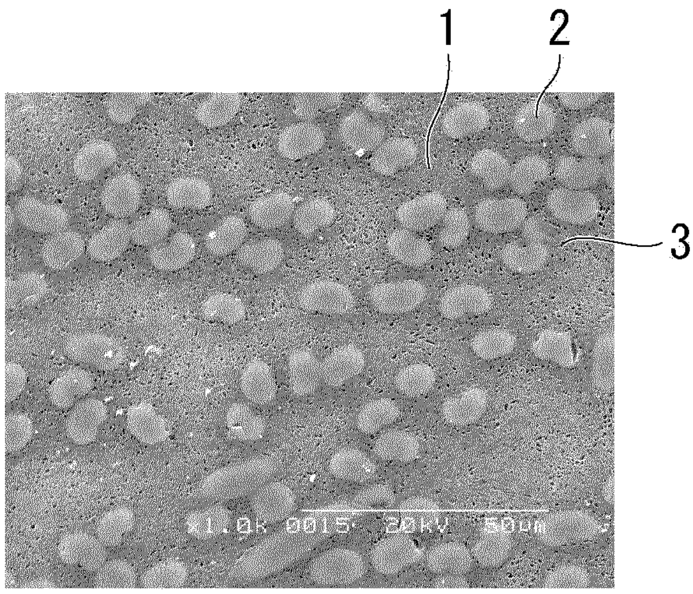


EP 4 324 874 A1

## Description

### Technical Field

The present invention relates to a resin composition and a molded body.

The present application claims priority based on Japanese Patent Application No. 2021-068309 filed in Japan on April 14, 2021, and the content thereof is incorporated herein.

### Background Art

Polymer materials are used in various fields because of ease of molding and lightness. Among them, in recent years, high-performance polymer materials (engineering materials) that can replace metals or ceramics have been used in various fields such as electrical, electronic, mechanical, optical equipment, automobile, aircraft, and medical fields.

Specific examples of high-performance polymer materials include polyether ketones and aromatic polysulfones.

A polyether ketone has excellent heat resistance, mechanical strength, chemical resistance, and sliding properties though that is more expensive than an aromatic polysulfone.

An aromatic polysulfone has excellent heat resistance, electrical properties, and hot water resistance, and has good mechanical strength though that is inferior to a polyether ketone.

Conventionally, a polyether ketone alone, an aromatic polysulfone alone, or a mixture of a polyether ketone and an aromatic polysulfone is used corresponding to various applications.

For example, in Patent Literature 1, disclosed is a resin composition consisting of: [1] 100 parts by weight of a resin composition consisting of 20 to 95% by weight of a polyether ketone and 80 to 5% by weight of an aromatic polysulfone, wherein a melt viscosity y of the polyether ketone at 400°C satisfies $100 \leq y \leq 70x + 1000$ (x: % by weight of polyether ketone based on a total amount of polyether ketone and aromatic polysulfone, y: unit poise), and [2] 10 to 200 parts by weight of a filler having an average fiber length or average diameter of 5 μm or more.

### Citation List

#### Patent Literature

Patent Literature 1:
Japanese Patent Laid-Open No. syowa 62-129347

### Summary of Invention

#### Problem to be Solved by Invention

Depending on the use of a polymer material, a molded body having higher mechanical strength is required.

However, the resin composition of a mixture system of polyether ether ketone and aromatic polysulfone disclosed in Patent Literature 1 has insufficient mechanical strength to meet a required level, even comprising a specific filler.

The present invention has been made in view of such circumstances, and an object of the present invention is to provide a resin composition which can produce a molded body having good mechanical strength in a mixture system of polyether ether ketone and aromatic polysulfone.

#### Means to Solve the Problem

In order to solve the problem, the present inventors have investigated a resin composition of a mixture system of polyether ether ketone and aromatic polysulfone.

In a resin composition containing a fibrous filler, comparing the mechanical strength of a molded body made by using a polyether ether ketone to that of a molded body made by using aromatic polysulfone, the mechanical strength of the molded body made by using polyether ether ketone had higher mechanical strength. Therefore, in order to increase the mechanical strength of a molded body made by using aromatic polysulfone, polyether ether ketone was used in combination. However, the mechanical strength of the molded body made by using aromatic polysulfone and polyether ether ketone in combination was only about the same as that of a molded made by using aromatic polysulfone, so that improvement in the mechanical strength could not be achieved.

As a result of extensive study, the present inventors has found that even in a mixture system of polyether ether ketone and aromatic polysulfone, a molded body having a mechanical strength equal to or more than that of a molded body made by using polyether ether ketone can be made, by comprising polyetherimide, which is amorphous as well

as aromatic polysulfone and exhibits compatibility with crystalline polyether ether ketone, and thus the present invention has been completed.

In other words, the present invention has the following aspects.

[1] A resin composition comprising a polyether ether ketone, an aromatic polysulfone, a polyetherimide, and a fibrous filler.
[2] The resin composition according to [1], wherein a content of the polyetherimide is less than 40% by mass based on the total content of the polyether ether ketone, the aromatic polysulfone, and the polyetherimide.
[3] The resin composition according to [1] or [2], wherein a content of the polyether ether ketone is 25% by mass or more based on the total content of the polyether ether ketone, the aromatic polysulfone, and the polyetherimide.
[4] The resin composition according to any one of [1] to [3], wherein a melt viscosity ratio between a melt viscosity of the polyether ether ketone at 400°C and a melt viscosity of the aromatic polysulfone at 400°C (a melt viscosity of aromatic polysulfone/a melt viscosity of polyether ether ketone) is 1.5 or more and 6 or less.
[5] The resin composition according to any one of [1] to [4], wherein a content of the fibrous filler is 10 parts by mass or more and 100 parts by mass or less based on 100 parts by mass of the total content of the polyether ether ketone, the aromatic polysulfone, and the polyetherimide.
[6] A resin composition which has a property that openings generated by contacting N-methylpyrrolidone with a cross section of a molded body made by using the resin composition comprising a polyether ether ketone, an aromatic polysulfone, a polyetherimide, and a fibrous filler have an average circle-equivalent diameter of 0.22 μm or less.
[7] A molded body produced by using the resin composition according to any one of [1] to [6].

Effects of Invention

According to the present invention, it is possible to provide a resin composition which can produce a molded body having good mechanical strength in a mixture system of polyether ether ketone and aromatic polysulfone.

Brief Description of Drawings

[Figure 1] Figure 1 is a SEM image of the cross section of the molded body made by using a resin composition in Example.
[Figure 2] Figure 2 is a SEM image of the cross section of the molded body made by using a resin composition in Comparative Example.

Embodiments for Carrying out Invention

(Resin Composition)

The resin composition of the present embodiment comprises a polyether ether ketone, an aromatic polysulfone, a polyetherimide, and a fibrous filler.

<Polyether ether ketone>

The aromatic polyether ether ketone in the resin composition of the present embodiment is typically a resin having a repeating unit comprising a divalent aromatic group (a residue obtained by removing, from an aromatic compound, two hydrogen atoms bonded to the aromatic ring thereof), a carbonyl group (-CO-) and an ether bond (-O-).

It is preferable that the polyether ether ketone in the resin composition of the present embodiment have a repeating unit including a structure represented by the following formula (K-1).

[Formula 1]

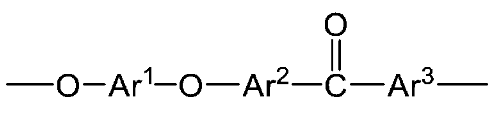

・・・(K−1)

wherein $Ar^1$, $Ar^2$ and $Ar^3$ are each independently an aromatic hydrocarbon group which may have a substituent.

In the formula (K-1), the aromatic hydrocarbon group in $Ar^1$, $Ar^2$ and $Ar^3$ is a hydrocarbon group having at least one aromatic ring. The aromatic ring is not limited as long as it is a cyclic conjugated system having 4n+2 $\pi$-electrons, and may be monocyclic or polycyclic. The aromatic ring may be an aromatic heterocyclic ring wherein part of carbon atoms constituting the aromatic ring are substituted with heteroatoms.

Examples of the aromatic ring in the aromatic hydrocarbon group include a benzene ring, a naphthalene ring, an anthracene ring, and a phenanthrene ring, and among them, a benzene ring is preferred. In other words, a phenylene group is preferred for the aromatic hydrocarbon group in $Ar^1$, $Ar^2$ and $Ar^3$.

The phenylene group may be a p-phenylene group, an m-phenylene group, or an o-phenylene group, and a p-phenylene group is preferred.

In the formula (K-1), examples of the substituents which the aromatic hydrocarbon groups in $Ar^1$, $Ar^2$ and $Ar^3$ may have include an alkyl group, an alkenyl group, an aryl group, a halogen atom, and an alkoxy group.

An alkyl group having 1 to 10 carbon atoms is preferred for the alkyl group, and specific examples of the alkyl group include a linear alkyl group such as a methyl group, an ethyl group, an n-propyl group, an n-butyl group, an n-hexyl group, an n-octyl group, and an n-decyl group; and a branched alkyl group such as an isopropyl group, an isobutyl group, an s-butyl group, a t-butyl group and a 2-ethylhexyl group.

Examples of the alkenyl group include a linear alkenyl group such as a vinyl group, a propenyl group (allyl group), and a 2-butenyl group; and a branched alkenyl group such as a 1-methylvinyl group, a 2-methylvinyl group, a 1-methylpropenyl group, and a 2-methylpropenyl group.

It is preferable that the aryl group be an aryl group having 6 to 20 carbon atoms, and specific suitable examples thereof include a phenyl group, an o-tolyl group, an m-tolyl group, a p-tolyl group, a 1-naphthyl group and a 2-naphthyl group.

Example of the halogen atom include a fluorine atom, a chlorine atom, a bromine atom and an iodine atom.

It is preferable that the alkoxy group be an alkoxy group having 1 to 5 carbon atoms, and suitable examples thereof include a methoxy group, an ethoxy group, an n-propoxy group, an iso-propoxy group, an n-butoxy group and a tert-butoxy group.

In the formula (K-1), the aromatic hydrocarbon groups which optionally have a substituent in $Ar^1$, $Ar^2$ and $Ar^3$ may specifically be groups shown in the following, wherein * represents a bond.

[Formula 2]

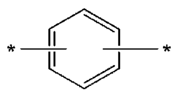
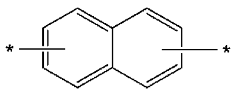
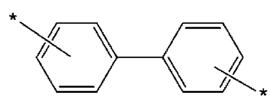
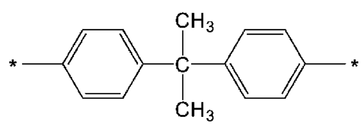

It is preferable that the polyether ether ketone in the resin composition of the present embodiment have either of repeating unit represented by the following formula (K-11) or (K-12), among them.

[Formula 3]

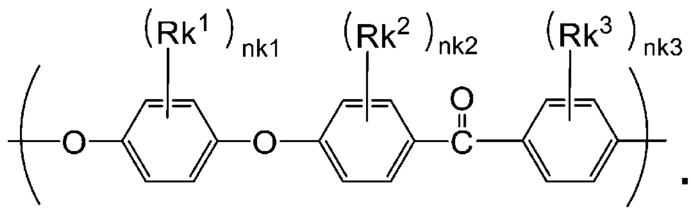
···(K−11)

wherein $Rk^1$ to $Rk^3$ are each independently an alkyl group, an alkenyl group, an aryl group, a halogen atom, or an alkoxy group, and nk1 to nk3 are each independently an integer of 0 to 4.

[Formula 4]

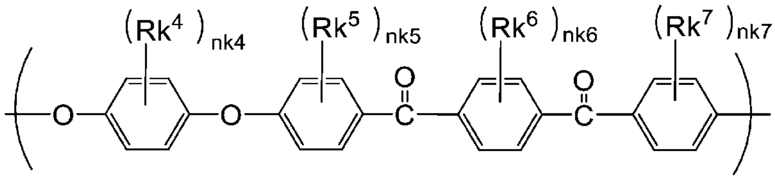

···(K−12)

wherein $Rk^4$ to $Rk^7$ are each independently an alkyl group, an alkenyl group, an aryl group, a halogen atom, or an alkoxy group, and nk4 to nk7 are each independently an integer of 0 to 4.

In the formula (K-11), examples of the alkyl group, alkenyl group, aryl group, halogen atom and alkoxy group in $Rk^1$ to $Rk^3$ include the same alkyl group, alkenyl group, aryl group, halogen atom, and alkoxy group which the aromatic hydrocarbon groups in $Ar^1$, $Ar^2$ and $Ar^3$ may have, respectively.

In the formula (K-11), nk1 to nk3 are each independently an integer of 0 to 4. It is preferable that nk1 to nk3 be each independently 0 or 1, and it is more preferably that all of nk1 to nk3 be 0.

In the formula (K-12), examples of the alkyl group, alkenyl group, aryl group, halogen atom and alkoxy group in $Rk^4$ to $Rk^7$ include the same alkyl group, alkenyl group, aryl group, halogen atom, and alkoxy group which the aromatic hydrocarbon groups in $Ar^1$, $Ar^2$ and $Ar^3$ may have, respectively.

In the formula (K-12), nk4 to nk7 are each independently an integer of 0 to 4. It is preferable that nk4 to nk7 be each independently 0 or 1, and it is more preferably that all of nk4 to nk7 be 0.

It is more preferable that the polyether ether ketone in the resin composition of the present embodiment have the repeating unit represented by the formula (K-11) among them.

[Melt viscosity of polyether ether ketone]

A melt viscosity of polyether ether ketone is preferably 10 Pa·s or more, more preferably 30 Pa·s or more, and still more preferably 50 Pa·s or more.

On the other hand, the melt viscosity of polyether ether ketone is preferably 800 Pa·s or less, more preferably 500 Pa·s or less, and still more preferably 200 Pa·s or less.

With a melt viscosity of the polyether ether ketone equal to or more than the preferred lower limit, the polyether ether ketone itself has more improved mechanical strength and heat resistance.

Further, with a melt viscosity of the polyether ether ketone equal to or less than the preferred upper limit, the polyether ether ketone and other resins (aromatic polysulfone, polyetherimide, etc.) are well mixed, respectively, so that a molded body made by using the resin composition of the present embodiment has more improved mechanical strength and heat resistance.

For example, the melt viscosity of the polyether ether ketone is preferably 10 Pa·s or more and 800 Pa·s or less, more preferably 30 Pa·s or more and 500 Pa·s or less, and still more preferably 50 Pa·s or more and 200 Pa·s or less.

· Method for measuring melt viscosity

In the present specification, the melt viscosity means apparent melt viscosity measured by using a constant test force extrusion-type capillary rheometer flow tester (manufactured by Shimadzu Corporation; trade name "CFT-500EX"). The resin to be measured is filled into a cylinder with a cross-sectional area of 1 $cm^2$ and left at 400°C for 5 minutes. An extrusion pressure of 4.9 MPa (50 $kgf/cm^2$) is then applied to the resin, which is extruded from a nozzle with a diameter of 1 mm and a length of 10 mm for the measurement.

[Weight average molecular weight (Mw) of polyether ether ketone]

The weight average molecular weight (Mw) of the polyether ether ketone is preferably 5000 or more, more preferably 6000 or more, and still more preferably 7000 or more.

On the other hand, the weight average molecular weight of polyether ether ketone is preferably 50000 or less, more preferably 40000 or less, and still more preferably 30000 or less.

With a weight average molecular weight of the polyether ether ketone equal to or more than the preferred value, the polyether ether ketone itself has more improved mechanical strength and heat resistance.

Further, with a weight average molecular weight of the polyether ether ketone equal to or less than the preferred value, the polyether ether ketone and other resins are well mixed, respectively, so that a molded body made by using

the resin composition of the present embodiment can have more improved mechanical strength and heat resistance.

For example, the weight average molecular weight of polyether ether ketone is preferably 5000 to 50000, more preferably 6000 to 40000, and still more preferably 7000 to 30000.

· Method for measuring weight average molecular weight

In the present specification, the weight average molecular weight can be determined, for example, by gel permeation chromatography (GPC) analysis, and means a value in terms of standard polystyrene based on a calibration curve obtained by measuring the molecular weight of standard polystyrene.

In the resin composition of the present embodiment, one type of polyether ether ketone may be used alone or two or more types thereof may be used in combination.

The content of polyether ether ketone is preferably 10% by mass or more, more preferably 20% by mass or more, and still more preferably 30% by mass or more, based on the total amount of the resin composition.

On the other hand, the content of polyether ether ketone is preferably 70% by mass or less, more preferably 60% by mass or less, and still more preferably 50% by mass or less, based on the total amount of the resin composition.

With a content of polyether ether ketone equal to or more than the preferred lower limit, the molded body made by using the resin composition of the present embodiment has more improved mechanical strength and heat resistance.

Further, with a content of polyether ether ketone equal to or less than the preferred upper limit, cost can be more suppressed.

For example, the content of polyether ether ketone is preferably 10% by mass or more and 70% by mass or less, more preferably 20% by mass or more and 60% by mass or less, and still more preferably 30% by mass or more and 50% by mass or less, based on the total amount of the resin composition.

<Aromatic polysulfone>

The aromatic polysulfone in the resin composition of the present embodiment is typically a resin having a repeating unit comprising a divalent aromatic group, a sulfonyl group ($-SO_2-$) and an ether bond.

It is preferable that the aromatic polysulfone in the resin composition of the present embodiment have a repeating unit comprising a structure represented by the following formula (S-1).

[Formula 5]

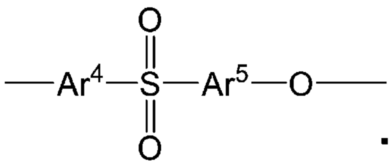

···(S−1)

wherein $Ar^4$ and $Ar^5$ are each independently an aromatic hydrocarbon group which may have a substituent.

In the formula (S-1), $Ar^4$ and $Ar^5$ are each independently an aromatic hydrocarbon group which may have a substituent, and examples thereof include the same aromatic hydrocarbon groups in $Ar^1$, $Ar^2$ and $Ar^3$ in the formula (K-1) described above.

In the formula (S-1), it is preferable that the aromatic hydrocarbon group in $Ar^4$ and $Ar^5$ be a phenylene group among them.

The phenylene group may be a p-phenylene group, an m-phenylene group, or an o-phenylene group, and a p-phenylene group is preferred.

In the formula (S-1), examples of the substituents that the aromatic hydrocarbon group in $Ar^4$ and $Ar^5$ may have include an alkyl group, an alkenyl group, an aryl group, a halogen atom, and an alkoxy group, which are the same substituents that the aromatic hydrocarbon group in $Ar^1$, $Ar^2$ and $Ar^3$ in the formula (K-1) described above may have, respectively.

It is preferable that the aromatic polysulfone in the resin composition of the present embodiment have any of the repeating unit represented by the following formula (S-11) or (S-12) among them.

[Formula 6]

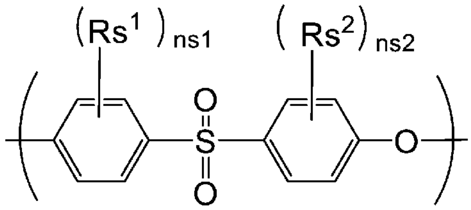

···(S−11)

wherein $Rs^1$ and $Rs^2$ are each independently an alkyl group, an alkenyl group, an aryl group, a halogen atom, or an alkoxy group, and ns1 and ns2 are each independently an integer of 0 to 4.

[Formula 7]

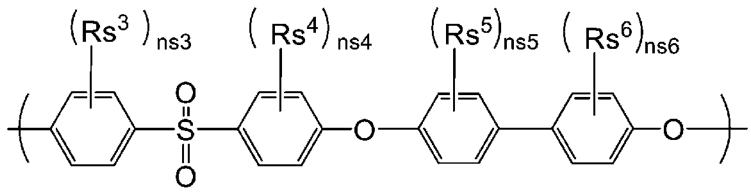

···(S−12)

wherein $Rs^3$ to $Rs^6$ are each independently an alkyl group, an alkenyl group, an aryl group, a halogen atom, or an alkoxy group, and ns3 to ns6 are each independently an integer of 0 to 4.

In the formula (S-11), examples of the alkyl group, alkenyl group, aryl group, halogen atom and alkoxy group in $Rs^1$ and $Rs^2$ include the same alkyl group, alkenyl group, aryl group, halogen atom and alkoxy group which the aromatic hydrocarbon group in $Ar^1$, $Ar^2$ and $Ar^3$ in the formula (K-1) described above may have.

In the formula (S-11), ns1 and ns2 are each independently an integer of 0 to 4, and it is preferable that ns1 and ns2 be each independently 0 or 1, and it is more preferable that both of ns1 and ns2 be 0.

In the formula (S-12), examples of the alkyl group, alkenyl group, aryl group, halogen atom and alkoxy group for $Rs^3$ to $Rs^6$ include the same alkyl group, alkenyl group, aryl group, halogen atom and alkoxy group which the aromatic hydrocarbon group in $Ar^1$, $Ar^2$ and $Ar^3$ in the formula (K-1) described above may have, respectively.

In the formula (S-12), ns3 to ns6 are each independently an integer of 0 to 4, and it is preferable that ns3 to ns6 be each independently 0 or 1, and it is more preferable that all of ns3 to ns6 be 0.

It is more preferable that the aromatic polysulfone in the resin composition of the present embodiment have a repeating unit represented by the formula (S-11) among them.

[Melt viscosity of aromatic polysulfone]

The melt viscosity of the aromatic polysulfone is preferably 150 Pa·s or more, more preferably 200 Pa·s or more, and still more preferably 300 Pa·s or more.

On the other hand, the melt viscosity of the aromatic polysulfone is preferably 700 Pa·s or less, more preferably 600 Pa·s or less, and even more preferably 550 Pa·s or less.

With a melt viscosity of the aromatic polysulfone equal to or more than the preferred lower limit, the aromatic polysulfone itself has more improved mechanical strength and heat resistance.

Further, with a melt viscosity of the aromatic polysulfone equal to or less than the preferred upper limit, the aromatic polysulfone has improved dispersibility, and a molded body made by using the resin composition of the present embodiment has more improved mechanical strength and heat resistance.

For example, the melt viscosity of the aromatic polysulfone is preferably 150 Pa·s or more and 700 Pa·s or less, more preferably 200 Pa·s or more and 600 Pa·s or less, and still more preferably 300 Pa·s or more and 550 Pa·s or less.

[Weight average absolute molecular weight (Mw) of aromatic polysulfone]

The weight-average absolute molecular weight (Mw) of the aromatic polysulfone is preferably 25000 or more, more preferably 32000 or more, and still more preferably 36000 or more.

On the other hand, the weight average absolute molecular weight (Mw) of the aromatic polysulfone is preferably

55000 or less, more preferably 50000 or less, and still more preferably 45000 or less.

With a weight-average absolute molecular weight (Mw) of the aromatic polysulfone equal to or more than the preferred lower limit, the aromatic polysulfone itself has more improved mechanical strength and heat resistance.

With a weight-average absolute molecular weight (Mw) of the aromatic polysulfone equal to or less than the preferred upper limit, the aromatic polysulfone has improved dispersibility, and a molded body made by using the resin composition of the present embodiment has more improved mechanical strength and heat resistance.

For example, the weight average absolute molecular weight (Mw) of the aromatic polysulfone is preferably 25000 or more and 55000 or less, more preferably 32000 or more and 50000 or less, and still more preferably 36000 or more and 45000 or less.

In the present specification, the weight average absolute molecular weight (Mw) may be measured by gel permeation chromatography (GPC) analysis under the following measurement conditions.

[Measurement condition]

Sample: Into 20 mL of N,N-dimethylformamide solution containing 10 mM lithium bromide, 0.040 g of aromatic polysulfone is added.

Sample injection volume: 100 μL
Column (stationary phase): two "TSKgel GMHHR-H" (diameter: 7.8 mm, length: 300 mm) manufactured by Tosoh Corporation connected in series
GPC device: HLC-8420 (manufactured by Tosoh)
Column temperature: 40°C
Eluent (mobile phase): N,N-dimethylformamide containing 10 mM lithium bromide
Eluent flow rate: 0.8 mL/min
Detector: differential refractometer (RI) + light scattering photometer (LS)
Molecular weight calculation method: The absolute molecular weight is calculated from the measurement results using the light scattering photometer (LS).

In the resin composition of the present embodiment, one type of aromatic polysulfone may be used alone, or two or more types thereof may be used in combination.

The content of aromatic polysulfone is preferably 1% by mass or more, more preferably 10% by mass or more, and still more preferably 13% by mass or more, based on the total amount of the resin composition.

On the other hand, the content of aromatic polysulfone is preferably 70% by mass or less, more preferably 60% by mass or less, and still more preferably 50% by mass or less, based on the total amount of the resin composition.

With a content of aromatic polysulfone equal to or more than the preferred lower limit, the content of polyether ether ketone is relatively reduced, so that the cost can be further reduced.

Further, with a content of aromatic polysulfone equal to or less than the preferred upper limit, a molded body made by using the resin composition of the present embodiment has more improved mechanical strength and heat resistance.

For example, the content of aromatic polysulfone is preferably 1% by mass or more and 70% by mass or less, more preferably 10 mass or more and 60% by mass or less, and still more preferably 13% by mass or more and 50% by mass or less, based on the total amount of the resin composition.

<Polyetherimide>

The polyetherimide in the resin composition of the present embodiment is typically a resin having a repeating unit comprising an aromatic group, an imide bond and an ether bond.

It is preferable that the polyetherimide in the resin composition of the present embodiment have a repeating unit represented by the following formula (I-1).

[Formula 8]

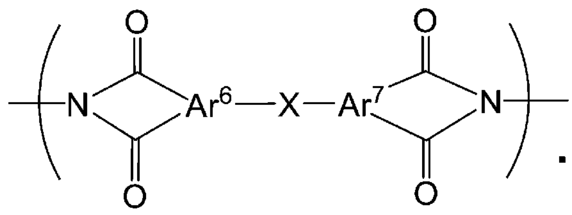

···(I−1)

wherein $Ar^6$ and $Ar^7$ are each independently an aromatic hydrocarbon group which may have a substituent, and X is a group derived from bisphenol.

In the formula (1-1), $Ar^6$ and $Ar^7$ are each independently an aromatic hydrocarbon group which may have a substituent, and examples thereof include the same one as the aromatic hydrocarbon groups in $Ar^1$, $Ar^2$ and $Ar^3$ in the formula (K-1) with one or more hydrogen atoms removed.

In the formula (I-1), it is preferable that the aromatic hydrocarbon group in $Ar^6$ and $Ar^7$ be a group with three or more hydrogen atoms removed from a benzene ring among them.

In the above formula (I-1), examples of the substituent that the aromatic hydrocarbon group in $Ar^6$ and $Ar^7$ may have include an alkyl group, an alkenyl group, an aryl group, a halogen atom, and an alkoxy group, which are the same substituents that the aromatic hydrocarbon group in $Ar^1$, $Ar^2$ and $Ar^3$ in the formula (K-1) may have, respectively.

In the formula (I-1), the group derived from bisphenol in X is specifically a divalent group wherein a hydrogen atom is removed from the one hydroxy group and a hydrogen atom is removed from the other hydroxy group in two hydroxy groups of bisphenol. Specific examples include a group derived from, respectively, bisphenol A: (2,2-bis(4-hydroxyphenyl)propane), bisphenol AF: 2,2-bis(4-hydroxyphenyl)hexafluoropropane, bis(4-hydroxyphenyl)sulfide, bis(4-hydroxy-3-methylphenyl)sulfide, and bis(4-hydroxyphenyl) ether, and a group derived from bisphenol A, i.e., a divalent group wherein a hydrogen atom is removed from the one hydroxy group and a hydrogen atom is removed from the other hydroxy group in two hydroxy groups of bisphenol A is preferred among them.

It is preferable that the polyetherimide in the resin composition of the present embodiment have a repeating unit represented by the following formula (I-11), among them.

[Formula 9]

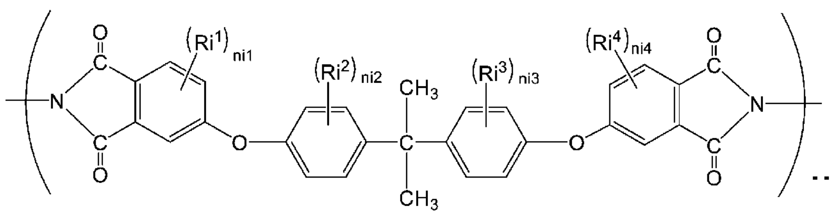

···(I−11)

wherein $Ri^1$ to $Ri^4$ are each independently an alkyl group, an alkenyl group, an aryl group, a halogen atom, or an alkoxy group, ni1 and ni4 are each independently an integer of 0 to 3, and ni2 and ni3 are each independently an integer of 0 to 4.

In the formula (I-11), examples of the alkyl group, alkenyl group, aryl group, halogen atom and alkoxy group for $Ri^1$ to $Ri^4$ include the same alkyl group, alkenyl group, aryl group, halogen atom and alkoxy group which the aromatic hydrocarbon group in $Ar^1$, $Ar^2$ and $Ar^3$ in the formula (K-1) described above may have, respectively.

In the formula (I-11), it is preferable that ni1 to ni4 be each independently 0 or 1, and more preferable that all of ni1 to ni4 be 0.

[Melt viscosity of polyetherimide]

The melt viscosity of polyetherimide is preferably 40 Pa·s or more, more preferably 60 Pa·s or more, and still more preferably 80 Pa·s or more.

On the other hand, the melt viscosity of polyetherimide is preferably 800 Pa·s or less, more preferably 600 Pa·s or less, and still more preferably 500 Pa·s or less.

With a melt viscosity of polyetherimide equal to or more than the preferred lower limit, the polyetherimide itself has more improved mechanical strength and heat resistance.

Further, with a melt viscosity of polyetherimide equal to or less than the preferred upper limit, a molded body made by using the resin composition of the present embodiment has more improved heat resistance.

For example, the melt viscosity of the polyetherimide is preferably 40 Pa·s or more and 800 Pa·s or less, more preferably 60 Pa·s or more and 600 Pa·s or less, and still more preferably 80 Pa·s or more and 500 Pa·s or less.

[Weight average molecular weight (Mw) of polyetherimide]

The weight average molecular weight (Mw) of polyetherimide is preferably 20000 or more, more preferably 30000 or more, and still more preferably 40000 or more.
On the other hand, the weight average molecular weight of polyetherimide is preferably 120000 or less, more preferably 110000 or less, and still more preferably 100000 or less.
With a weight average molecular weight of polyetherimide equal to or more than the preferred lower limit, the polyetherimide itself has improved mechanical strength and heat resistance.
With a weight-average molecular weight of the polyetherimide equal to or less than the preferred upper limit, the polyetherimide and other resins are better mixed, and a molded body made by using the resin composition of the present embodiment has more improved mechanical strength and heat resistance.
For example, the weight average molecular weight of polyetherimide is preferably 20000 to 120000, more preferably 30000 to 110000, and still more preferably 40000 to 100000.
In the resin composition of the present embodiment, one type of polyetherimide may be used alone, or two or more types thereof may be used in combination.
The content of polyetherimide is preferably 0.5% by mass or more, more preferably 1% by mass or more, and still more preferably 2% by mass or more, based on the total amount of the resin composition.
On the other hand, the content of polyetherimide is preferably 40% by mass or less, more preferably 30% by mass or less, and still more preferably 12% by mass or less, based on the total amount of the resin composition.
With a content of polyetherimide equal to or more than the preferred lower limit, the polyether ether ketone and the aromatic polysulfone can be better mixed, and a molded body made by using the resin composition of the present embodiment has more improved mechanical strength and heat resistance.
Further, with a content of polyetherimide equal to or less than the preferred upper limit, the heat resistance is more improved.
For example, the content of polyetherimide is preferably 0.5% by mass or more and 40% by mass or less, more preferably 1% by mass or more and 30% by mass or less, and still more preferably 2% by mass or more and 12% by mass or less, based on the total amount of the resin composition.

<Fibrous filler>

The fibrous filler in the resin composition of the present embodiment may be a fibrous inorganic filler or a fibrous organic filler.
Examples of fibrous inorganic fillers include glass fibers; carbon fibers such as PAN-based, pitch-based, rayon-based, phenol-based, and lignin-based carbon fibers; ceramic fibers such as silica fibers, alumina fibers, and silica-alumina fibers; metal fibers such as iron, gold, copper, aluminum, brass, and stainless steel; silicon carbide fibers; and boron fibers. Examples of fibrous inorganic fillers also include whiskers such as potassium titanate whiskers, barium titanate whiskers, wollastonite whiskers, aluminum borate whiskers, silicon nitride whiskers, and silicon carbide whiskers.
Examples of the fibrous organic fillers include polyester fibers, para- or meta-aramid fibers, and PBO fibers.
As the fibrous fillers in the present embodiment, carbon fibers are preferred among them from the viewpoint of further improving the mechanical strength.

. Carbon fiber

It is preferable that the carbon fibers in the present embodiment be fibrous substance having a carbon content of 90% or more in its chemical composition.
It is preferable to use polyacrylonitrile, pitch, regenerated cellulose, or the like as raw material of the carbon fibers. A fiber precursor spun from these raw materials is treated at 1000 to 2000°C for use. Further, those graphitized at 2000°C or more and 3000°C or less exhibit high strength and high elasticity, and can be preferably used. In order to obtain fibers with higher strength and higher elasticity, polyacrylonitrile is preferably used as raw material.
The carbon fibers in the present embodiment have a number average fiber length of preferably 30 μm or more and 300 μm or less, more preferably 50 μm or more and 250 μm or less, and still more preferably 70 μm or more and 200 μm or less.
The carbon fibers in the present embodiment have a number average fiber diameter of preferably 2 μm or more and 10 μm or less, more preferably 4 μm or more and 10 μm or less, and still more preferably 4 μm or more and 9 μm or less.
The number average fiber diameter and the number average fiber length of carbon fibers in the present embodiment mean the values obtained by the following measuring methods.

[Measuring method]

First, the resin composition according to the present embodiment is heated at 500°C for 4 hours to remove the resin component.
About 1 g of the residue is collected in a conical beaker, 150 mL of acetone is added into the beaker and then the residue is dispersed sufficiently. Then, about 5 mL of the resultant is taken, dropped on the entire surface of a slide glass, and air-dried. This time, the operation is performed so that about 1000 or more carbon fibers can be collected on the slide glass.
Next, the above-described slide glass is mounted on a projector, and the image with a magnification of 100 is displayed, and the length of the enlarged and projected fiber is measured and recorded with a linear scale. The number average fiber diameter and the number average fiber length are calculated by the following formula.

$$\text{Number average fiber diameter (or Number average fiber length)} = [(x1+x2+\cdots+xn)/n] \times 1/100$$

wherein, x is measured value of each fiber diameter (or fiber length), n is the number for each, for example, 400.
In the resin composition of the present embodiment, one type of fibrous fillers may be used alone or two or more types thereof may be used in combination.
The content of the fibrous fillers is preferably 150 by mass or more, more preferably 20% by mass or more, and still more preferably 25% by mass or more, based on the total amount of the resin composition.
On the other hand, the content of the fibrous fillers is preferably 55% by mass or less, more preferably 50% by mass or less, and still more preferably 45% by mass or less, based on the total amount of the resin composition.
With a content of the fibrous filler equal to or more than the preferred lower limit, a molded body made by using the resin composition of the present embodiment has more improved mechanical strength and heat resistance.
Further, with a content of the fibrous filler equal to or less than the preferred upper limit, moldability is more improved.
For example, the content of fibrous fillers is preferably 15% by mass or more and 55% by mass or less, more preferably 20% by mass or more and 50% by mass or less, and still more preferably 25% by mass or more and 45% by mass or less, based on the total amount of the resin composition.
The content of fibrous fillers is preferably 10 parts by mass or more, more preferably 20 parts by mass or more, and still more preferably 30 parts by mass or more, based on a total content of 100 parts by mass of the polyether ether ketone, aromatic polysulfone, and polyetherimide.
On the other hand, the content of the fibrous fillers is preferably 100 parts by mass or less, more preferably 80 parts by mass or less, and still more preferably 70 parts by mass or less, based on a total content of 100 parts by mass of the polyether ether ketone, aromatic polysulfone, and polyetherimide.
With a content of the fibrous fillers equal to or more than the preferred lower limit, a molded body made by using the resin composition of the present embodiment has more improved mechanical strength and heat resistance.
Further, with a content of the fibrous fillers equal to or less than the preferred upper limit, moldability is more improved.
For example, the content of the fibrous fillers is preferably 10 parts by mass or more and 100 parts by mass or less, more preferably 20 parts by mass or more and 80 parts by mass or less, and still more preferably 30 parts by mass or more and 70 parts by mass or less, based on a total content of 100 parts by mass of the polyether ether ketone, aromatic polysulfone, and polyetherimide.

«Optional component»

The resin composition of the present embodiment may comprise optional components such as other resins excluding polyether ether ketone, aromatic polysulfone, and polyetherimide, weighing stabilizers, release agents, antioxidants, heat stabilizers, ultraviolet absorbers, antistatic agents, surfactants, flame retardants, and colorants, within a range not impairing the effect of the present invention.

<<Other resins>>

Examples of the other resins include known thermoplastic resins. Examples of the thermoplastic resins include polyolefin resins such as polyethylene, polypropylene, polybutadiene, and polymethylpentene; vinyl-based resins such as vinyl chloride, vinylidene chloride-vinyl acetate, and polyvinyl alcohol; polystyrene-based resins such as polystyrene,

acrylonitrile-styrene resin (AS resin), and acrylonitrile- butadiene-styrene resin (ABS resin); polyamide-based resins such as polyamide 6 (nylon 6), polyamide 66 (nylon 66), polyamide 11 (nylon 11), polyamide 12 (nylon 12), polyamide 46 (nylon 46), polyamide 610 (nylon 610), polytetramethylene terephthalamide (nylon 4T), polyhexamethylene terephthalamide (nylon 6T), polymetaxylylene adipamide (nylon MXD6), polynonamethylene terephthalamide (nylon 9T), and polydecamethylene terephthalamide (nylon 10T); polyester-based resins such as polyethylene terephthalate, polyethylene naphthalate, polybutylene terephthalate, and polytrimethylene terephthalate; polyphenylene sulfides such as linear polyphenylene sulfide, crosslinked polyphenylene sulfide, and semi-crosslinked polyphenylene sulfide; polyether ketones such as polyether ketone; polycarbonates; polyphenylene ethers; and polyimide-based resins such as thermoplastic polyimide and polyamideimide.

The total content of polyether ether ketone, aromatic polysulfone, and polyetherimide in the whole resins contained in the resin composition of the present embodiment is preferably 80% by mass or more, more preferably 90% by mass or more, still more preferably 95% by mass or more, and particularly preferably 100% by mass, that is, containing no resin other than polyether ether ketone, aromatic polysulfone, and polyetherimide.

In the resin composition of the present embodiment, the content of polyether ether ketone is preferably 25% by mass or more, more preferably 40% by mass or more, and still more preferably 50% by mass or more, based on the total content (100% by mass) of polyether ether ketone, aromatic polysulfone, and polyetherimide.

On the other hand, the content of polyether ether ketone is preferably 80% by mass or less, more preferably 70% by mass or less, and still more preferably 60% by mass or less, based on the total content of polyether ether ketone, aromatic polysulfone, and polyetherimide.

In the resin composition of the present embodiment, the content of aromatic polysulfone is preferably 10% by mass or more, more preferably 20% by mass or more, and still more preferably 25% by mass or more, based on the total content of polyether ether ketone, aromatic polysulfone, and polyetherimide.

On the other hand, the content of aromatic polysulfone is preferably 55% by mass or less, more preferably 50% by mass or less, and still more preferably 45% by mass or less, based on the total content of polyether ether ketone, aromatic polysulfone, and polyetherimide.

In the resin composition of the present embodiment, the content of polyetherimide is preferably 1% by mass or more, more preferably 2% by mass or more, and still more preferably 3% by mass or more, based on the total content of polyether ether ketone, aromatic polysulfone, and polyetherimide.

On the other hand, the content of polyetherimide is preferably less than 40% by mass, more preferably 25% by mass or less, and still more preferably 15% by mass or less, based on the total content of polyether ether ketone, aromatic polysulfone, and polyetherimide.

For example, in the resin composition of the present embodiment, the content of polyether ether ketone, based on a total content of 100% by mass of polyether ether ketone, aromatic polysulfone, and polyetherimide is preferably 25% by mass or more and 80% by mass or less, more preferably 40% by mass or more and 70% by mass or less, and still more preferably 50% by mass or more and 60% by mass or less;

the content of aromatic polysulfone is preferably 10% by mass or more and 55% by mass or less, more preferably 20% by mass or more and 50% by mass or less, and still more preferably 25% by mass or more and 45% by mass or less;

the content of polyetherimide is preferably 1% by mass or more and less than 40% by mass, more preferably 2% by mass or more and 25% by mass or less, and still more preferably 3% by mass or more and 15% by mass or less.

In the resin composition of the present embodiment, when each content of polyether ether ketone, aromatic polysulfone, and polyetherimide is in the preferred range, the effect of the present invention is obtained more easily.

In the resin composition of the present embodiment, melt viscosity ratio between a melt viscosity of the polyether ether ketone at 400°C and a melt viscosity of the aromatic polysulfone at 400°C (a melt viscosity of aromatic polysulfone/a melt viscosity of polyether ether ketone) is preferably more than 1.1 and 10 or less, more preferably 1.3 or more and 8 or less, and still more preferably 1.5 or more and 6 or less.

In the resin composition of the present embodiment, with a melt viscosity ratio in the preferred range, the resins each are better mixed, and a molded body made by using the resin composition of the present embodiment has more improved mechanical strength and heat resistance.

It is preferable that the resin composition of the present embodiment have a property that a cross section of a molded body made by using the resin composition forms openings having an average circle-equivalent diameter of 0.22 μm or less when in contact with N-methylpyrrolidone.

The method for measuring the average circle-equivalent diameter of the openings and the details of the openings are described below.

As described above, the resin composition of the present embodiment comprises a polyether ether ketone, an aromatic polysulfone, a polyetherimide, and a fibrous filler.

A conventional molded body made by using a resin composition comprising polyether ether ketone, aromatic polysulfone, and fibrous fillers has mechanical strength inferior to that of a molded body made by using a resin composition comprising polyether ether ketone and fibrous fillers and that of a molded body made by using resin composition comprising aromatic polysulfone and fibrous fillers. The reason is presumed that due to low compatibility between the crystalline polyether ether ketone and the amorphous aromatic polysulfone, mixing is not performed well, so that fracture may occur from the interface between the polyether ether ketone and the aromatic polysulfone to reduce the mechanical strength.

On the other hand, the resin composition of the present embodiment comprises polyetherimide which is amorphous as well as aromatic polysulfone and has compatibility with crystalline polyether ether ketone, so that polyether ether ketone, aromatic polysulfone, and polyetherimides may be each well mixed. Therefore, fracture from the interface between the polyether ether ketone and the aromatic polysulfone is suppressed. In addition, good mixing of these resins improves the dispersibility of the fibrous fillers.

Therefore, according to the resin composition of the present embodiment, a molded body having good mechanical strength can be made in a mixed system of polyether ether ketone and aromatic polysulfone.

In addition, the resin composition of the present embodiment has also excellent impact resistance because of good dispersibility of each of the resins and fibrous fillers.

In addition, the resin composition of the present embodiment comprises at least polyether ether ketone, aromatic polysulfone, and polyetherimide as resins, being less expensive than a resin composition wherein polyether ether ketone is used alone as resin.

Further, the resin composition of the present embodiment has the following aspects.

The resin composition of the present embodiment comprises a polyether ether ketone, an aromatic polysulfone, a polyetherimide, and a fibrous filler, and has a property that openings generated by contacting N-methylpyrrolidone with a cross section of a molded body made by using the resin composition under the following conditions have an average circle-equivalent circle diameter of 0.22 μm or less.

More specifically, the resin composition of the present embodiment is a resin composition comprising a polyether ether ketone, an aromatic polysulfone, a polyetherimide, and a fibrous filler, and has a property that openings generated by contacting N-methylpyrrolidone with a cross section of an ASTM No. 4 dumbbell-shaped test piece have an average circle-equivalent diameter of 0.22 μm or less, wherein the test piece is obtained by granulating the resin composition using a twin screw extruder (PCM-30, manufactured by Ikegai Corp.) at a cylinder temperature 370°C to make pellets, vacuum-drying the pellets at 150°C for 5 hours, and feeding the dried pellets to PNX40-5A (manufactured by Nissei Plastic Industrial Co., Ltd.) for injection molding at a cylinder temperature of 390°C.

Examples of the polyether ether ketone, aromatic polysulfone, polyetherimide, and fibrous filler include those similar to the polyether ether ketone, aromatic polysulfone, polyetherimide, and fibrous filler described above, respectively.

The openings formed by contacting N-methylpyrrolidone with a cross section of a molded body is formed by dissolution and removal of aromatic polysulfone by N-methylpyrrolidone.

Therefore, the smaller the average circle-equivalent diameter of the openings is, the better the dispersibility of the aromatic polysulfone in the resin composition is.

[Method for measuring average circle-equivalent diameter of openings]

The method for measuring the average circle-equivalent diameter of the openings may include, for example, the following procedures.

First, an ASTM No. 4 dumbbell-shaped test piece is obtained by granulating the resin composition of the present embodiment using a twin screw extruder (PCM-30, manufactured by Ikegai Corp.) at a cylinder temperature of 370°C to make pellets, vacuum-drying the pellets at 150°C for 5 hours, and feeding the pellets to PNX40-5A (manufactured by Nissei Plastic Industrial Co., Ltd.) for injection molding at a cylinder temperature of 390°C.

Subsequently, by cutting the ASTM No. 4 dumbbell-shaped test piece at center in the short end direction to cut out a cross section, and immersing the cross section in 20 mL of N-methylpyrrolidone per cross section area ($cm^2$) cut out for 8 hours, the aromatic polysulfone is dissolved and removed from the cut cross section of the molded body.

Subsequently, surface observation (backscattered electron image) from directly above the cross section is performed using a scanning electron microscope (trade name "S-2300" manufactured by Hitachi, Ltd.) at an acceleration voltage of 20 kV, and a SEM image with a number of pixels of 1888×1536 at a magnification ratio of 1000 is obtained.

Subsequently, the resulting SEM image is loaded into a computer, and using an image analysis software Igor Pro published by WaveMetrics, the image is subjected to binarization after shading correction, and noise removal by opening processing.

Subsequently, from the respective areas of all the openings detected from the SEM image after the above processing, the respective radii of openings are calculated assuming that the openings are perfect circles. The average

value of the respective calculated radii is defined as the average circle-equivalent diameter of the openings.

Figure 1 is a SEM image of the cross section of a molded body made by using a resin composition of the present embodiment used in [Method for measuring the average circle-equivalent diameter of openings] described above.

In Figure 1, a continuous phase 1 includes polyether ether ketone and polyetherimide. Opening parts 3 are openings formed by dissolution and removal of aromatic polysulfone by N-methylpyrrolidone. The fibrous filler 2 is a carbon fiber.

By measuring the average circle-equivalent diameters of the opening parts 3 by the method described above, the average circle-equivalent diameters of the openings can be calculated.

The resin composition of the present embodiment comprises a polyether ether ketone, an aromatic polysulfone, a polyetherimide, and a fibrous filler, and has a property that the openings have an average circle-equivalent diameter of 0.22 μm or less. The average diameter can be controlled to 0.22 μm or less by appropriately adjusting the structures, content ratios, melt viscosities, molecular weights, etc. of the polyether ether ketone, aromatic polysulfone, and polyetherimide, respectively.

Because the resin composition of the present embodiment has an average diameter of 0.22 μm or less, the dispersibility of aromatic polysulfone is high, the polyether ether ketone, aromatic polysulfone, and polyetherimide are well mixed, and the dispersibility of fibrous fillers is also enhanced. Therefore, a molded body made by using the resin composition in a mixed system of polyether ether ketone and aromatic polysulfone can achieve compatibility between mechanical strength and heat resistance.

Further, the resin composition of the present embodiment has the following aspects.

"1": A resin composition comprising a polyether ether ketone, an aromatic polysulfone, a polyetherimide, and a fibrous filler,

the content of polyether ether ketone being preferably 10% by mass or more and 70% by mass or less, more preferably 20% by mass or more and 60% by mass or less, and still more preferably 30% by mass or more and 50% by mass or less, based on the total amount of resin composition,

the content of aromatic polysulfone being preferably 1% by mass or more and 70% by mass or less, more preferably 10% by mass or more and 60% by mass or less, and still more preferably 13% by mass or more and 50% by mass or less, based on the total amount of resin composition,

the content of polyetherimide being preferably 0.5% by mass or more and 40% by mass or less, more preferably 1% by mass or more and 30% by mass or less, and still more preferably 2% by mass or more and 12% by mass or less, based on the total amount of resin composition, and

the content of fibrous filler being preferably 15% by mass or more and 55% by mass or less, more preferably 20% by mass or more and 50% by mass or less, and still more preferably 25% by mass or more and 45% by mass or less, based on the total amount of resin composition.

"2": The resin composition according to "1",

wherein the melt viscosity of the polyether ether ketone at 400°C is preferably 10 Pa·s or more and 800 Pa·s or less, more preferably 30 Pa·s or more and 500 Pa·s or less, and still more preferably 50 Pa·s or more and 200 Pa·s or less,

the melt viscosity of the aromatic polysulfone at 400°C is preferably 150 Pa·s or more and 600 Pa·s or less, more preferably 200 Pa·s or more and 550 Pa·s or less, and still more preferably 300 Pa·s or more and 500 Pa·s or less, and

the melt viscosity of the polyetherimide at 400°C is preferably 40 Pa·s or more and 800 Pa·s or less, more preferably 60 Pa·s or more and 600 Pa·s or less, and still more preferably 80 Pa·s or more and 500 Pa·s or less.

"3": The resin composition according to "1" or "2",

wherein the polyether ether ketone has a weight average molecular weight of preferably 5000 to 55000, more preferably 6000 to 40000, still more preferably 7000 to 30000,

the aromatic polysulfone has a weight average absolute molecular weight of preferably 25000 to 60000, more preferably 25000 to 50000, and still more preferably 28000 to 40000, and

the polyetherimide has a weight average molecular weight of preferably 20000 to 120000, more preferably 30000 to 110000, and still more preferably 40000 to 100000.

"4": The resin according to any one of "1" to "3",
wherein the melt viscosity ratio between the melt viscosity of the polyether ether ketone at 400°C and the melt

viscosity of the aromatic polysulfone at 400°C (a melt viscosity of aromatic polysulfone/a melt viscosity of polyether ether ketone) is preferably more than 1.1 and 10 or less, more preferably 1.3 or more and 8 or less, and still more preferably 1.5 or more and 6 or less.

"5": The resin composition according to any one of "1" to "4",

wherein based on a total content of 100% by mass of the polyether ether ketone, the aromatic polysulfone, and the polyetherimide, the content of the polyether ether ketone is preferably 25% by mass or more and 80% by mass or less, more preferably 40% by mass or more and 70% by mass or less, and still more preferably 50% by mass or more and 60% by mass or less,

the content of the aromatic polysulfone is preferably 10% by mass or more and 55% by mass or less, more preferably 20% by mass or more and 50% by mass or less, and still more preferably 25% by mass or more and 45% by mass or less, and

the content of the polyetherimide is preferably 1% by mass or more and less than 40% by mass, more preferably 2% by mass or more and 25% by mass or less, and still more preferably 3% by mass or more and 15% by mass or less.

"6": The resin composition according to any one of items "1" to "5", wherein the resin composition has a property that a cross section of a molded body formed from the resin composition forms openings having an average circle-equivalent diameter of 0.22 μm or less when in contact with N-methylpyrrolidone.

"7": A resin composition comprising a polyether ether ketone, an aromatic polysulfone, a polyetherimide, and a fibrous filler, wherein the resin composition has a property that a cross section of a molded body formed from the resin composition forms openings having an average circle-equivalent diameter of 0.22 μm or less when in contact with N-methylpyrrolidone,

the content of polyether ether ketone being preferably 10% by mass or more and 70% by mass or less, more preferably 20% by mass or more and 60% by mass or less, and still more preferably 30% by mass or more and 50% by mass or less, based on the total amount of resin composition,

the content of aromatic polysulfone being preferably 1% by mass or more and 70% by mass or less, more preferably 10% by mass or more and 60% by mass or less, and still more preferably 13% by mass or more and 50% by mass or less, based on the total amount of resin composition,

the content of polyetherimide being preferably 0.5% by mass or more and 40% by mass or less, more preferably 1% by mass or more and 30% by mass or less, and still more preferably 2% by mass or more and 12% by mass or less, based on the total amount of resin composition, and

the content of fibrous fillers is preferably 15% by mass or more and 55% by mass or less, more preferably 20% by mass or more and 50% by mass or less, and still more preferably 25% by mass or more and 45% by mass or less, based on the total amount of resin composition.

"8": The resin composition according to "7",

wherein the melt viscosity of the polyether ether ketone at 400°C is preferably 10 Pa·s or more and 800 Pa·s or less, more preferably 30 Pa·s or more and 500 Pa·s or less, and still more preferably 50 Pa·s or more and 200 Pa·s or less,

the melt viscosity of the aromatic polysulfone at 400°C is preferably 150 Pa·s or more and 600 Pa·s or less, more preferably 200 Pa·s or more and 550 Pa·s or less, and still more preferably 300 Pa·s or more and 500 Pa·s or less, and

the melt viscosity of the polyetherimide at 400°C is preferably 40 Pa·s or more and 800 Pa·s or less, more preferably 60 Pa·s or more and 600 Pa·s or less, and still more preferably 80 Pa·s or more and 500 Pa·s or less.

"9": The resin composition according to "7" or "8",

wherein the melt viscosity ratio between the melt viscosity of the polyether ether ketone at 400°C and the melt viscosity of the aromatic polysulfone at 400°C (a melt viscosity of aromatic polysulfone/a melt viscosity of polyether ether ketone) is preferably more than 1.1 and 10 or less, more preferably 1.3 or more and 8 or less, and still more preferably 1.5 or more and 6 or less.

(Method for producing resin composition)

The resin composition of the present embodiment may be produced by mixing the polyether ether ketone, the aromatic polysulfone, the polyetherimide, the fibrous filler, and, on an as needed basis, other components.

Further, the resin composition in a pellet form may be produced by melt-kneading the polyether ether ketone, the aromatic polysulfone, the polyether imide, the fibrous filler and, on an as needed basis, other components with a twin-screw extruder while degassing, discharging the resulting mixture in a strand form through a circular nozzle (discharge port), and then cutting the strand with a strand cutter.

In the method for producing the resin composition of the present embodiment, the preferred blending ratio of polyether ether ketone, aromatic polysulfone, polyetherimide, and fibrous filler is the same as the preferred content of each component of the resulting resin composition.

Further, in the method for producing the resin composition of the present embodiment, the preferred melt viscosity, the weight average molecular weight, and the weight average absolute molecular weight of the polyether ether ketone, aromatic polysulfone, and polyetherimide are the same as the preferred melt viscosity, the weight average molecular weight, and the weight average absolute molecular weight of each component of the resulting resin composition.

Further, in the method for producing the resin composition of the present embodiment, a melt viscosity ratio between a melt viscosity of the polyether ether ketone at 400°C and a melt viscosity of the aromatic polysulfone at 400°C (a melt viscosity of aromatic polysulfone/a melt viscosity of polyether ether ketone) is preferably more than 1.1 and 10 or less, more preferably 1.3 or more and 8 or less, and still more preferably 1.5 or more and 6 or less.

(Molded body)

The molded body of the present embodiment is a molded body made by using the resin composition described above.

The molded body of the present embodiment may be obtained by a known forming method from the resin composition. As the method for forming the resin composition of the present embodiment, a melt molding method is preferred, and examples thereof include an injection molding method, an extrusion molding method such as a T-die method and an inflation method, a compression molding method, a blow molding method, a vacuum molding method, and a press molding method. An injection molding method is preferred among them.

For example, in the case of injection molding with the resin composition described above as a molding material, the resin composition is melted and the melted resin composition is injected into a mold using a known injection molding machine.

Here, when the resin composition is fed into an injection molding machine, each component may be fed separately into the injection molding machine, or some or all of the components may be mixed in advance such that the resulting mixture may be fed into the injection molding machine.

Examples of the known injection molding machines include TR450EH3 manufactured by Sodick Co., Ltd. and a hydraulic horizontal molding machine PS40E5ASE manufactured by Nissei Plastic Industrial Co., Ltd.

The temperature conditions for injection molding are appropriately determined according to the type of resin composition, and it is preferable to set the cylinder temperature of the injection molding machine to a temperature 10 to 80°C higher than the flow starting temperature of the resin composition used.

It is preferable that the temperature of the mold be set in the range from room temperature (25°C) to 180°C, from the viewpoints of the cooling rate of the resin composition and productivity.

Other injection conditions such as screw rotation speed, back pressure, injection speed, holding pressure, and time for holding pressure may be appropriately adjusted.

The molded body of the present embodiment can be applied to all uses to which a resin composition can be generally applied.

Examples of the molded body of the present embodiment includes electric and electronic parts such as connectors, sockets, relay parts, coil bobbins, optical pickups, oscillators, printed wiring boards, circuit boards, semiconductor packages, and computer-related parts; semiconductor manufacturing process-related parts such as IC trays and wafer carriers; parts for home electric appliances such as VTR's, television sets, clothes irons, air conditioners, stereos, vacuum cleaners, refrigerators, rice cookers, and lighting equipment; lighting equipment parts such as lamp reflectors and lamp holders; parts for audio products such as compact disc, Laser Disc (registered trademark), and speakers; parts for communications equipment such as ferrules for optical cables, telephone parts, facsimile parts, and modems; parts for copiers and printers such as separation claws and heater holders; machine parts such as impellers, fan gears, gears, bearings, motor parts and cases; automobile parts such as mechanical elements for automobiles, engine parts, parts in engine room, electrical components and interior parts; cooking utensils such as pots for microwave cooking and heat-resistant tableware; building materials or construction materials such as heat insulation and soundproofing materials such as flooring and wall materials, support materials such as beams and columns, and roofing materials; parts for air planes, spacecrafts and space components; components for radiation facility such as atomic reactor, components for marine facility, cleaning jigs, parts for optical equipment, valves, pipes, nozzles, filters, membranes, medical component parts and medical materials, sensor parts, sanitary equipment, sports goods and leisure goods.

The molded bodies of the present embodiment described above have good mechanical strength because of

use of the resin composition described above.

The molded bodies of the present embodiment are particularly useful as automobile parts because of having high mechanical strength and heat resistance.

## Examples

The present invention is described in more detail with reference to Examples as follows though the present invention is not limited to the following Examples.

### [Preparation of polyether ether ketone, aromatic polysulfone, and polyetherimide]

As polyether ether ketone, three types of polyether ether ketone having a melt viscosity (Pa·s) shown in Table 1 and a repeating unit represented by the following formula (K-a) were prepared (PEEK1, PEEK2 and PEEK 3 shown below).

PEEK1: Ketaspire KT-890P (manufactured by Solvay)
PEEK2: VICTREX PEEK 150P (manufactured by Victrex)
PEEK3: VICTREX PEEK 450P (manufactured by Victrex)

As aromatic polysulfone, three types of aromatic polysulfone having a weight average absolute molecular weight and a melt viscosity (Pa·s) shown in Table 1 and a repeating unit represented by the following formula (S-a) were prepared (PES1, PES2 and PES 3).

As polyetherimide, three types of polyetherimide having a melt viscosity (Pa·s) shown in Table 1 and a repeating unit represented by the following formula (I-a) were prepared (PEI1, PEI2 and PEI3 shown below).

PEI1: Ultem 1000 (manufactured by SABIC)
PEI2: Ultem 1010 (manufactured by SABIC)
PEI3: Ultem 1040A (manufactured by SABIC)

[Formula 10]

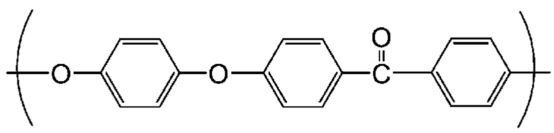
···(K−a)

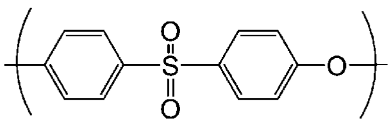
···(S−a)

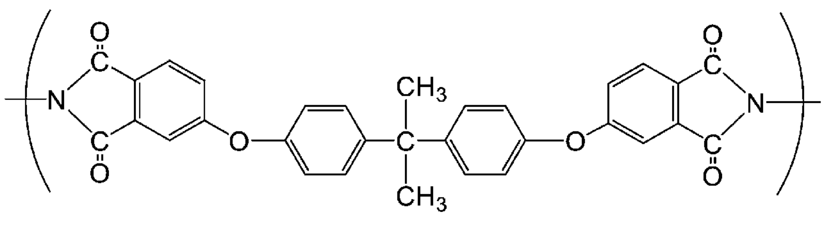
···(I−a)

### [Measurement of weight average absolute molecular weight]

The weight average absolute molecular weight of the aromatic polysulfone shown in Table 1 was measured by gel permeation chromatography (GPC) analysis.

### [Measurement condition]

Sample: Aromatic polysulfone in an amount of 0.40 g was blended into 20 mL of N,N-dimethylformamide

solution containing 10 mM lithium bromide.

Sample injection volume: 100 μL
Column (stationary phase): Two "TSKgel GMHHR-H" (diameter: 7.8 mm, length: 300 mm) manufactured by Tosoh Corporation were connected in series.
GPC unit: HLC-8420 (manufactured by Tosoh Corporation)
Column temperature: 40°C
Eluent (mobile phase): N,N-dimethylformamide containing 10 mM lithium bromide
Eluent flow rate: 0.8 mL/min
Detector: differential refractometer (RI) + light scattering photometer (LS)
Molecular weight calculation method: The absolute molecular weight was calculated from the measurement results by light scattering photometer (LS).

[Measurement of melt viscosity]

A melt viscosity of each resin shown in Table 1 was measured using a constant test force extrusion type capillary rheometer flow tester (trade name "CFT-500EX", manufactured by Shimadzu Corporation). Each of the resins was filled into a cylinder with a cross-sectional area of 1 $cm^2$ and left at 400°C for 5 minutes. An extrusion pressure of 4.9 MPa (50 $kgf/cm^2$) was then applied to the resin, which was extruded from a nozzle with a diameter of 1 mm and a length of 10 mm for the measurement.

[Table 1]

| | | Weight average absolute molecular weight | Melt viscosity (Pa·s) |
|---|---|---|---|
| Polyether ether ketone | PEEK1 | - | 80 |
| | PEEK2 | - | 134 |
| | PEEK3 | - | 703 |
| Aromatic polysulfone | PES1 | 31100 | 160 |
| | PES2 | 38350 | 364 |
| | PES3 | 44100 | 544 |
| Polyetherimide | PEI1 | - | 410 |
| | PE12 | - | 320 |
| | PEI3 | - | 100 |

[Production example of resin composition]

(Examples 1 to 12, Comparative Examples 1 and 2)

A mixture of polyether ether ketone, aromatic polysulfone, polyetherimide, and fibrous filler at a blending ratio shown in the following Table 2 was granulated with a twin-screw extruder (PCM-30 manufactured by Ikegai Co., Ltd.) at a cylinder temperature of 370°C to obtain a resin composition (pellet) of each example.
In Table 2, a melt viscosity ratio between a melt viscosity of the polyether ether ketone at 400°C and a melt viscosity of the aromatic polysulfone at 400°C (PES/PEEK viscosity ratio) was also described.

[Table 2]

| | Polyether ether ketone | Aromatic polysulfone | Polyetherimide | Fibrous filler | PES/PEEK viscosity ratio |
|---|---|---|---|---|---|
| Example 1 | PEEK1 [57] | PES2 [38] | PE12 [5] | CF1 [43] | 4.5 |
| Example 2 | PEEK1 [57] | PES2 [38] | PEI3 [5] | CF1 [43] | 4.5 |

(continued)

| | Polyether ether ketone | Aromatic polysulfone | Polyetherimide | Fibrous filler | PES/PEEK viscosity ratio |
|---|---|---|---|---|---|
| Example 3 | PEEK1 [57] | PES2 [38] | PEI1 [5] | CF1 [43] | 4.5 |
| Example 4 | PEEK1 [57] | PES2 [29] | PEI1 [14] | CF1 [43] | 4.5 |
| Example 5 | PEEK1 [57] | PES2 [22] | PEI1 [21] | CF1 [43] | 4.5 |
| Example 6 | PEEK1 [57] | PES2 [5] | PEI1 [38] | CF1 [43] | 4.5 |
| Example 7 | PEEK2 [57] | PES3 [38] | PEI1 [5] | CF1 [43] | 4.1 |
| Example 8 | PEEK1 [57] | PES1 [38] | PEI1 [5] | CF1 [43] | 1.7 |
| Example 9 | PEEK2 [57] | PES1 [38] | PEI1 [5] | CF1 [67] | 1.1 |
| Example 10 | PEEK3 [57] | PES2 [38] | PEI1 [5] | CF1 [43] | 0.5 |
| Example 11 | PEEK1 [42] | PES2 [50] | PEI1 [8] | CF1 [43] | 4.5 |
| Example 12 | PEEK1 [30] | PES2 [65] | PEI1 [5] | CF1 [43] | 4.5 |
| Comparative Example 1 | PEEK1 [57] | PES2 [43] | - | CF1 [43] | 4.5 |
| Comparative Example 2 | - | PES2 [100] | - | CF1 [43] | - |

In Table 2, each abbreviation has the following meaning. The value in [ ] is the content (parts by mass).

PEEK1 to PEEK3: polyether ether ketone PEEK1 to PEEK3 described above

PES1 to PES3: aromatic polysulfone PES1 to PES3 described above

PEI1 to PEI3: polyetherimide PEI1 to PEI3 described above

CF1: carbon fiber (trade name "TR03MLA5G", manufactured by Mitsubishi Chemical Corporation, number average fiber diameter: 7 μm, number average fiber length 6 mm)

[Production example of molded body]

A molded body was produced from the resin composition in each example described above.
Specifically, using an injection molding machine (trade name "NEX50IV-5EG", manufactured by Nissei Plastic Industrial Co., Ltd.,), under conditions at a cylinder temperature of 390°C, a mold temperature of 160°C, and an injection speed of 50 mm/s, an ASTM No. 4 dumbbell-shaped test piece and a rod-shaped molded body having a width of 12.7 mm, a length of 127 mm and a thickness of 6.4 mm were produced, respectively.

[Measurement of tensile strength (MPa)]

The tensile strength (maximum point strength) of an ASTM No. 4 dumbbell-shaped test piece made by using the resin composition of each example was measured according to ASTM D638 at a test speed of 10 mm/min. The

results were shown in Table 3 as "tensile strength (MPa)".

[Measurement of deflection temperature under load (°C) ]

The deflection temperature under load (DTUL) of a rod-shaped molded body made by using the resin composition of each example was measured according to ASTM D648 at a load of 1.82 MPa and a temperature increase rate of 2°C/min. The results were shown in Table 3 as "DTUL (°C)".

[Measurement of circle-equivalent diameter (μm) ]

The average circle-equivalent diameter of openings in the cross section of the molded body made by using the resin composition of each example was measured in the following procedures.

First, by cutting the ASTM No. 4 dumbbell-shaped test piece of each example at center in the transverse direction to cut out a cross section, and immersing the cross section in 20 mL of N-methylpyrrolidone per cross section ($cm^2$) cut out for 8 hours, the aromatic polysulfone was dissolved and removed from the cut cross section of the molded body.

Subsequently, surface observation (backscattered electron image) from directly above the cross section was performed using a scanning electron microscope (trade name "S-2300" manufactured by Hitachi, Ltd.) at an acceleration voltage of 20 kV, so as to obtain a SEM image with a number of pixels of 1888x1536 at a magnification ratio of 1000.

Subsequently, the resulting SEM image was loaded into a computer, and using an image analysis software Igor Pro published by WaveMetrics, the image was subjected to binarization after shading correction, and noise removal by opening processing.

Subsequently, from the respective areas of all the openings detected from the SEM image after the above processing, the respective radii of openings were calculated assuming that the openings were perfect circles. The average value of the respective calculated radii was defined as the average circle-equivalent diameters of the openings, which were shown in Table 3.

Figure 1 is an SEM image of the cross section of a molded body made by using the resin composition in Example 1.

In Figure 1, continuous phase 1 is polyether ether ketone and polyetherimide. Opening parts 3 are openings formed by dissolution and removal of aromatic polysulfone by N-methylpyrrolidone. The fibrous filler 2 is a carbon fiber.

Figure 2 is a SEM image of the cross section of a molded body made by using the resin composition in Comparative Example 1.

In Figure 2, continuous phase 4 is polyether ether ketone. Opening parts 5 are openings formed by dissolution and removal of aromatic polysulfone by N-methylpyrrolidone. The fibrous filler 6 is a carbon fiber.

[Table 3]

| | Tensile strength (MPa) | DTUL (°C) | Circle-equivalent diameter ( μ m) |
|---|---|---|---|
| Example 1 | 224 | 292 | 0.18 |
| Example 2 | 225 | 297 | 0.19 |
| Example 3 | 230 | 291 | 0.20 |
| Example 4 | 236 | 265 | 0.19 |
| Example 5 | 242 | 249 | 0.18 |
| Example 6 | 241 | 229 | 0.21 |
| Example 7 | 230 | 268 | 0.19 |
| Example 8 | 232 | 293 | 0.18 |
| Example 9 | 204 | 223 | 0.26 |
| Example 10 | 210 | 228 | 0.30 |
| Example 11 | 227 | 239 | 0.42 |
| Example 12 | 210 | 222 | 0.47 |
| Comparative Example 1 | 190 | 242 | 0.23 |
| Comparative Example 2 | 184 | 218 | - |

· Presence or absence of polyetherimide

As shown in Table 3, it has been confirmed that the molded bodies made by using the resin compositions in Examples have higher tensile strength than the molded bodies made by using the resin compositions in Comparative Examples.

· Comparison of viscosity ratio PES/PEEK

The molded bodies made by using the resin compositions in Examples 3 and 7 to 10 having the same content ratio of polyether ether ketone, aromatic polysulfone and polyetherimide and a different viscosity ratio PES/PEEK among Examples were compared. It has been confirmed that compared with the molded body made by using the resin composition in Example 10 having a viscosity ratio PES/PEEK of 0.5, or made by using the resin composition in Example 9 having a viscosity ratio PES/PEEK of 1.1, any of the molded bodies made by using the resin composition in Examples 3, 7, or 8 having a viscosity ratio PES/PEEK of 1.7 to 4.5 has higher tensile strength and DTUL (heat resistance).

· Comparison of circle-equivalent diameter (μm)

Compared to the molded bodies made by using resin compositions in Examples 9 to 12 having an circle-equivalent diameter (μm) of 0.26 to 0.47 μm, the molded bodies made by using resin compositions in Examples 1 to 8 having an circle-equivalent diameter (μm) of 0.22 μm or less achieved better compatibility between tensile strength and DTUL (heat resistance).

Although preferred Examples of the present invention have been described above, the present invention is not limited thereto. Addition, omission, substitution of a configuration, and other modifications of a configuration are possible unless they depart from the object of the present invention. The present invention is not limited to the foregoing explanation, but is limited only to the scope of the appended claims.

Reference Sign List

1, 4: CONTINUOUS PHASE
3, 5: OPENING PART
2, 6: FIBROUS FILLER

## Claims

1. A resin composition comprising a polyether ether ketone, an aromatic polysulfone, a polyetherimide, and a fibrous filler.

2. The resin composition according to claim 1, wherein the content of the polyetherimide is less than 40% by mass based on a total content of the polyether ether ketone, the aromatic polysulfone, and the polyetherimide.

3. The resin composition according to claim 1 or 2, wherein a content of the polyether ether ketone is 25% by mass or more based on the total content of the polyether ether ketone, the aromatic polysulfone, and the polyetherimide.

4. The resin composition according to any one of claims 1 to 3, wherein a melt viscosity ratio between a melt viscosity of the polyether ether ketone at 400°C and a melt viscosity of the aromatic polysulfone at 400°C (a melt viscosity of aromatic polysulfone/a melt viscosity of polyether ether ketone) is 1.5 or more and 6 or less.

5. The resin composition according to any one of claims 1 to 4, wherein a content of the fibrous filler is 10 parts by mass or more and 100 parts by mass or less based on 100 parts by mass of the total content of the polyether ether ketone, the aromatic polysulfone, and the polyetherimide.

6. A resin composition which has a property that openings generated by contacting N-methylpyrrolidone with a cross section of a molded body made by using the resin composition comprising a polyether ether ketone, an aromatic polysulfone, a polyetherimide, and a fibrous filler have an average circle-equivalent diameter of 0.22 μm or less.

**7.** A molded body produced by using the resin composition according to any one of claims 1 to 6.

[Figure 1]

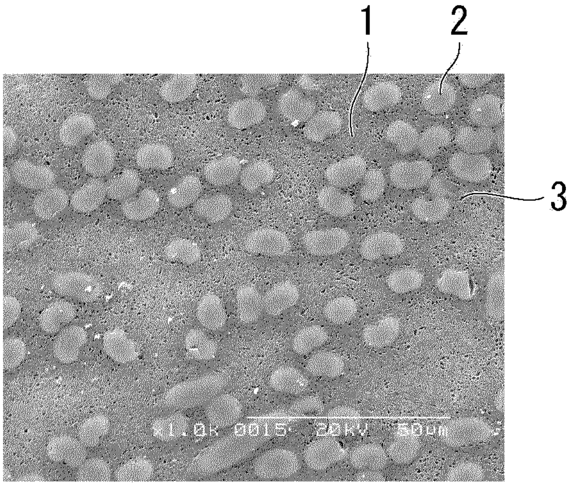


[Figure 2]

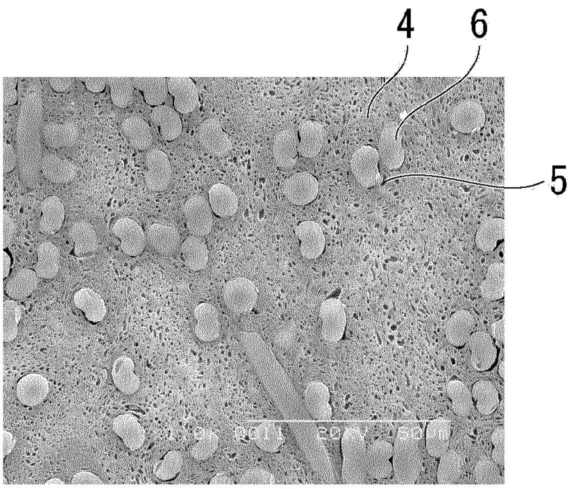

**INTERNATIONAL SEARCH REPORT**

International application No. **PCT/JP2022/012044**

**A. CLASSIFICATION OF SUBJECT MATTER**

***C08K 7/02***(2006.01)i; ***C08L 81/06***(2006.01)i; ***C08L 71/10***(2006.01)i; ***C08L 79/08***(2006.01)i
FI: C08L71/10; C08L79/08 B; C08K7/02; C08L81/06

According to International Patent Classification (IPC) or to both national classification and IPC

**B. FIELDS SEARCHED**

Minimum documentation searched (classification system followed by classification symbols)

C08K7/02; C08L81/06; C08L71/10; C08L79/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 62-54758 A (IMPERIAL CHEMICAL INDUSTRIES, PLC) 10 March 1987 (1987-03-10) claims 1, 6, 7, p. 3, lower left column, paragraph 2 to p. 4, upper right column, paragraph 1, p. 6, upper right column, paragraph 4, p. 6, lower right column, paragraph 3 to p. 7, upper right column, paragraph 2, p. 8, upper left column, paragraph 2, examples 1, 2 | 1-7 |
| Y | | 1-7 |
| X | JP 2-1759 A (MITSUI TOATSU CHEMICALS, INC.) 08 January 1990 (1990-01-08) p. 3, lower left column, paragraph 2, comparative example 4 | 1-7 |
| Y | JP 62-129347 A (SUMITOMO CHEMICAL CO., LTD.) 11 June 1987 (1987-06-11) claim 1, p. 4, upper right column, paragraph 2 to p. 4, lower left column, paragraph 1, examples | 1-7 |
| Y | JP 62-273255 A (SUMITOMO CHEMICAL CO., LTD.) 27 November 1987 (1987-11-27) claim 1, p. 4, upper right column, paragraph 1 to p. 4, lower left column, paragraph 1 | 1-7 |
| A | JP 2018-526517 A (SOLVAY SPECIALTY POLYMERS USA, LLC) 13 September 2018 (2018-09-13) | 1-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/012044**

**C. DOCUMENTS CONSIDERED TO BE RELEVANT**

| Category* | Citation of document, with indication, where appropriate, of the relevant passages | Relevant to claim No. |
|---|---|---|
| A | JP 2020-506980 A (TORAY INDUSTRIES, INC.) 05 March 2020 (2020-03-05) | 1-7 |
| A | JP 2010-525126 A (SOLVAY ADVANCED POLYMERS LLC) 22 July 2010 (2010-07-22) | 1-7 |
| A | CN 109504030 A (JIANGSU AOSHENG NEW MATERIAL TECH CO., LTD.) 22 March 2019 (2019-03-22) | 1-7 |

Form PCT/ISA/210 (second sheet) (January 2015)

**INTERNATIONAL SEARCH REPORT**
**Information on patent family members**

International application No.
**PCT/JP2022/012044**

| Patent document cited in search report | Publication date (day/month/year) | Patent family member(s) | Publication date (day/month/year) |
|---|---|---|---|
| JP 62-54758 A | 10 March 1987 | US 5071925 A<br>claims 1, 2, 7, column 1, paragraphs 3-5, column 5, paragraph 1, column 5, paragraph 6 to column 6, paragraph 3, column 7, paragraph 2, examples 1, 2<br>GB 8519060 A<br>EP 211604 A2 | |
| JP 2-1759 A | 08 January 1990 | (Family: none) | |
| JP 62-129347 A | 11 June 1987 | US 4804697 A<br>claim 1, column 5, paragraphs 5-10, examples<br>EP 224236 A2 | |
| JP 62-273255 A | 27 November 1987 | EP 247512 A2<br>claim 1, p. 5, line 44 to p. 6, line 11 | |
| JP 2018-526517 A | 13 September 2018 | US 2018/0340066 A1<br>WO 2017/042349 A1<br>EP 3347407 A1 | |
| JP 2020-506980 A | 05 March 2020 | US 2019/0338119 A1<br>CN 108250668 A | |
| JP 2010-525126 A | 22 July 2010 | US 2010/0144955 A1<br>EP 2142599 A1<br>CN 101668814 A | |
| CN 109504030 A | 22 March 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021068309 A
- JP 62129347 A